# NEW EUROPEAN PATENT SPECIFICATION

(11) **EP 0 602 694 B2**
(45) Date of publication and mention of the opposition decision: **24.07.2002**
(45) Mention of the grant of the patent: 18.03.1998
(21) Application number: 93203039.8
(22) Date of filing: 29.10.1993
(51) Int. Cl.: B65G 47/34, B65G 17/48, B65G 17/08

(54) **A conveyor**
Förderer
Transporteur

(30) Priority: 16.12.1992 NL 9202171
(43) Date of publication of application: 22.06.1994
(60) Divisional application: 97201512.7
(73) Proprietor: VANDERLANDE INDUSTRIES NEDERLAND B.V., NL-5466 RB Veghel (NL)
(72) Inventor: van den Goor, Jakobus Marie, NL-5641 WG Eindhoven (NL)
(74) Representative: Vollebregt, Cornelis Jacobus, Ir.

(56) References cited:
- EP-A- 0 444 734
- EP-A- 0 484 150
- US-A- 4 711 341

## Description

The invention relates to a conveyor comprising a frame and an endless drivable transport means, provided with carriers extending transversely to the direction of movement of the transport means, parallel to each other, which carriers are pivotally coupled to at least one endless flexible coupling means, whilst at least a few of said carriers support pusher shoes, which are movable along the carriers in question at desired locations by guide means provided on the frame, and, seen in the direction of movement of the transport means, the sides of the rear part of a pusher shoe are bounded by pushing surfaces including an angle with each other, whose extensions intersect at a point located behind the pusher shoe in question during operation, seen in the intended direction of movement of the pusher shoe and a lateral boundary surface of the pusher shoe joining a front end of a pushing surface at least partially slopes upward in the direction of the longitudinal axis of the upper surface of the pusher shoe.

Conveyors of this kind are known from EP-A-484150 and are used for conveying objects, whereby objects present on the transport means can be laterally discharged from the transport means at desired locations, by moving a number of pusher shoes along the carriers in a desired direction, which pusher shoes push the object in question from the transport means transversally to the direction of movement of the transport means.

From EP-A-0484150 there is known such a conveyor wherein the upwardly sloping part of the lateral boundary surface of the pusher shoe joining the front end of the pushing surface joins at its bottom edge a protruding nose extending over and parallel to the upper surface of the carrier.

In practice it has become apparent that when using conveyors of this kind there is a danger that, when an object is moved in the direction of one side of the transport means by a number of pusher shoes, the rear part of the object may become jammed between the pusher shoes moving the object and a pusher shoe which is located near the side of the transport means in whose direction the object is being moved.

The invention is defined in the claim.

When using the construction according to the invention an object which threatens to become jammed between the pusher shoes laterally moving the object across the transport means towards one side thereof, and a pusher shoe disposed near the side in question, will be able to slide upwards along the upwardly sloping part of the boundary surface of said pusher shoe disposed near the side of the transport means, as a result of which jamming of the object is avoided.

The invention will be explained in more detail hereafter with reference to the accompanying figures.

Figures 1-3 are diagrammatic views of a conveyor according to the invention, illustrating various stages of the displacement of an object by means of pusher shoes.

Figure 4 is a perspective view of a sliding shoe with an associated carrier.

Figure 5 is a cross-sectional view of a carrier with a sliding shoe mounted thereon.

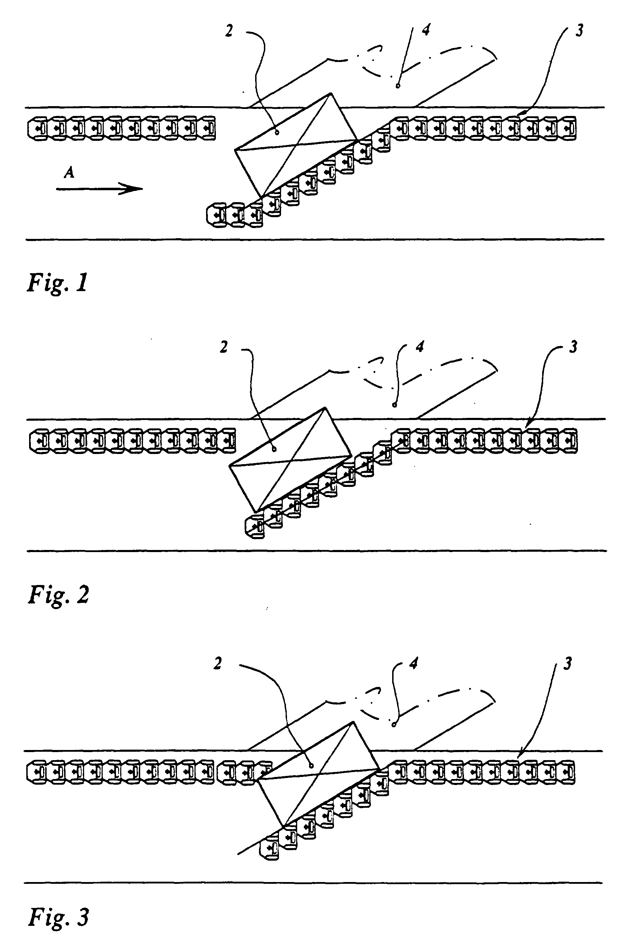

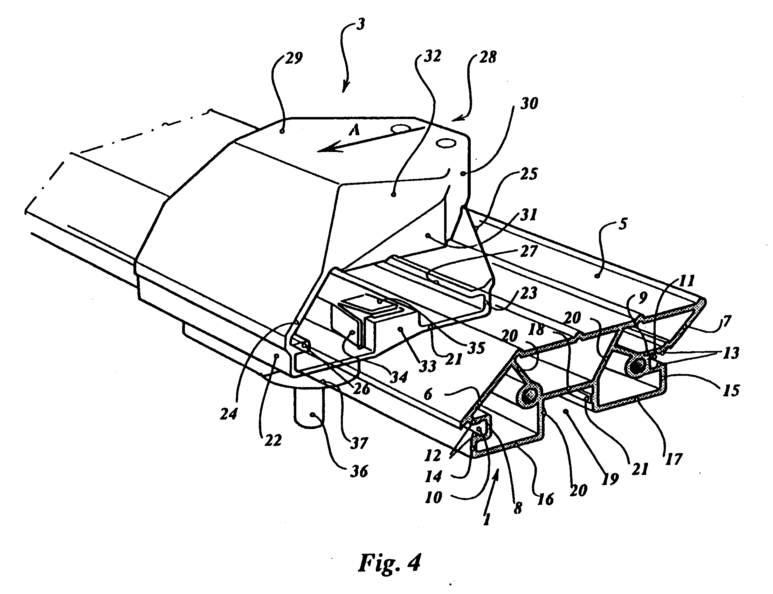

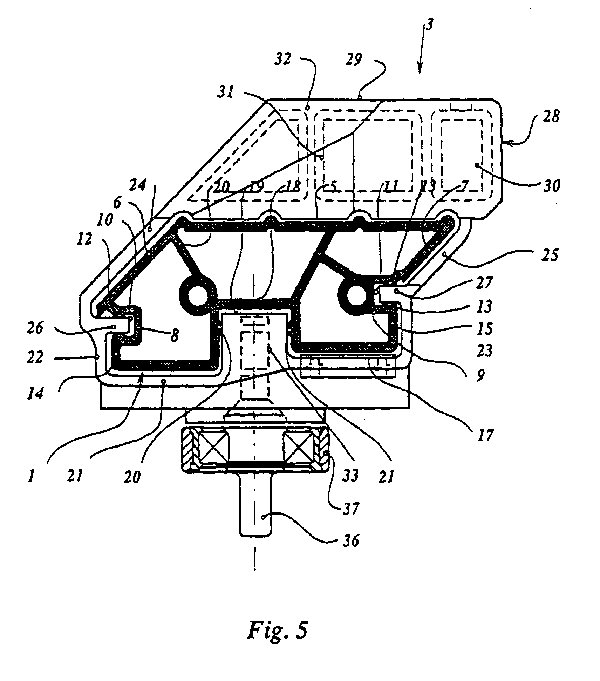

The conveyor shown in the Figures is provided with a transport means, which is built up of a plurality of carriers 1 extending parallel to each other, said carriers being connected by one or more flexible coupling means to form an endless transport means, on whose upper part objects 2 can be moved in the direction according to the arrow A, as is diagrammatically indicated in Figures 1 - 3. Pusher shoes 3 are coupled to the carriers, in such a manner that said pusher shoes can be moved with respect to the carriers transversely to the longitudinal direction of the transport means formed by the carriers and thus parallel to the longitudinal direction of the carriers 1 themselves. Discharge chutes 4, discharge conveyors or the like may join the side(s) of the transport means, by means of which discharge chutes, discharge conveyors or the like objects 2 delivered thereto from the transport means may be transported further. Means known per se (not shown) are disposed near such discharge chutes, discharge conveyors or the like, by which means a desired number of pusher shoes may be moved from one side of the transport means, the bottom side in Figures 1 - 3, to the other side of the transport means, so as to push an object 2 present on the transport means in the direction of the discharge chute 4 or the like in the manner illustrated in the Figures. As is shown in particular in Figure 3 there is a danger of an object becoming jammed hereby, in particular near its rear end, between the pusher shoes 3 moved along desired carriers 1 and pushing the object to one side and for example a pusher shoe already located near the side in question. This may be caused by the fact that the object, as a result of an outside influence, remains or has remained slightly behind with respect to the pusher shoes moving the object to the side. This jamming may for example also occur when an object is moved to one side and pusher shoes running therebehind are moved in the direction of the other side or are for example disposed near the centre of the transport means. In order to prevent the risk of such jamming the configuration of the pusher shoe is as shown in Figures 4 and 5 and described hereafter.

As is shown in more detail in Figures 4 and 5 a carrier 1 preferably consists of an extruded section, for example of aluminium, which has an upper surface 5 for supporting the objects to be moved. Two side walls 6 and 7, extending at least substantially parallel to each other and including an acute angle with the upper surface 5, join the longitudinal edges of the upper surface 5. Substantially U-shaped parts 8 and 9 respectively join the bottom edges of the side walls 6 and 7, said parts bounding the spaces 10 and 11 respectively, which are open towards the outside of the section. Near the entry openings of the open spaces 10 and 11 the boundary walls are provided with inwardly projecting ribs 12 and 13 respectively, which extend along the length of the carrier.

Vertically extending side wall parts 14 and 15 respectively join the U-shaped parts 8 and 9, said parts blending into horizontally extending bottom wall parts 16 and 17 respectively. The wall part 16 is located slightly lower than the wall part 17, as will be apparent from Figure 5.

The facing ends of the bottom wall parts 16 and 17 are connected by a substantially U-shaped connecting part 18, which bounds a slot 19 being open at the bottom side of the carrier and extending in the longitudinal direction of the carrier. The connecting part 18 thereby comprises opposed ribs 20 and 21 projecting into said slot.

Furthermore reinforcing ribs 20 are provided in the interior of the carrier, in the manner shown in Figures 4 and 5.

The pusher shoe, which is preferably made of plastic material, is provided with a base 21, whose longitudinal edges are joined by upright wall parts 22 and 23 respectively, which blend into upwardly sloping wall parts 24 and 25 extending at least substantially parallel to the side wall parts 6 and 7 of the carrier. Near the transition between the wall parts 22 and 24 and between the wall parts 23 and 25 horizontally extending guide strips 26 and 27 respectively are provided, which extend into the open spaces 10 and 11 respectively and which are movably accommodated to fit tightly between the ribs 12 and 13 respectively.

The upper ends of the wall parts 24 and 25 are interconnected by a block-shaped part 28 located above the upper surface 5 of the carrier 1, said part having a substantially flat upper surface 29.

As will be apparent in particular from Figure 4, the rear part of the block-shaped means 28 is more or less trapezoidal, seen in plan view, said rear part being bounded at the sides of the block-shaped part 28 by two at least substantially vertically extending pushing surfaces 30, at least one of which will abut against one side of an object to be moved during normal movement of an object by means of the pusher shoe in question, as is diagrammatically illustrated in Figures 1 - 3.

In the illustrated embodiment a boundary surface 31 of the block joins the front edge of said pushing surface, seen in the intended direction of movement according to the arrow A, said boundary surface extending substantially vertically, at least substantially parallel to the direction of movement of the transport means. The height of said vertically extending boundary surface 31 gradually decreases towards the front thereby, whilst the maximum height of said boundary surface 31 is less than the height of the pushing surface 30, as will be apparent from Figure 4. A boundary surface 32, which slopes upwards in the direction of the longitudinal axis of the upper surface 29 of the pusher shoe extending in the direction according to the arrow A, joins the upper edge of the boundary surface 31.

As is furthermore apparent from Figures 4 and 5 a rib 33, which extends upwards in the passage bounded by the aforesaid parts 21-28 of the pusher shoe, joins the bottom 21 of the pusher shoe, said rib being accommodated to fit between the guide ribs 20 and 21 located within the U-shaped connecting part 18. As is shown in Figure 4 two resilient lips 34 and 35 are thereby provided near one end of the rib 33, said lips being connected to the rib 33 at one end. One lip 35 is located near the upper surface of the rib 33 thereby, whilst the other lip 34 is located near one side of the rib 33. The resilient lips 34 and 35, which are each connected near one end to the rib 33 so as to be pivotable about an imaginary pivot pin extending perpendicularly to the longitudinal axis of the rib 33, may be integral with the pusher shoe or be secured thereto as separate resilient tongues. The lips extend in the same direction from their connections to the rib 33 thereby, which facilitates the provision of the pusher shoe on the carrier 1.

It will be apparent that the rib 33 accommodated within the U-shaped connecting piece 18, which extends across the width of the pusher shoe, provides a good guiding of the pusher shoe when the pusher shoe is being moved in the longitudinal direction of the carrier 1, so that the pusher shoe is prevented from being undesirably pulled out of square with respect to the carrier 1. The guide strips 26 and 27 accommodated within the spaces 10 and 11 also contribute towards a good guiding of the pusher shoe. Any play is taken up by the resilient tongues 34 and 35 pressing against one side and the upper boundary wall respectively of the connecting piece 18 of the carrier 1. Resilient tongues of this type may also be provided on other parts of the pusher shoe, for example near the wall part 24 and/or 25, instead of or in combination with the resilient tongues 34 and 35.

As a result of this construction a satisfactory, rattle-free and low-noise movement of the pusher shoe 3 along the carrier 1 may be effected, using a simple construction of the carrier 1 and the pusher shoe. In order to effect the movement of the pusher shoe a guide pin 36 with a guide wheel 37 mounted thereon is secured to the bottom side of the pusher shoe, so as to co-operate with means known per se (not shown) for effecting a movement of the pusher shoe with respect to the carrier.

By using the above-described upwardly sloping boundary surface 32, which is located at the front side of the pusher shoe, seen in the intended direction of movement according to the arrow A, an object which contacts such a pusher shoe with its rear end, as is shown more in particular in Figure 3 for the left-hand top corner of the object 2, will be able to move upwards along this sloping surface to the upper surface 29 of the pusher shoe, thus avoiding undesirable jamming of an object, which not only may lead to damage to the object but also to serious damage to the pusher shoe and the driving mechanism for the pusher shoes.

## Claims

1. A conveyor comprising a frame and an endless drivable transport means, provided with carriers (1) extending transversely to the direction of movement (A) of the transport means, parallel to each other, which carriers (1) are pivotally coupled to at least one endless flexible coupling means and have upper surfaces (5) for supporting objects. whilst at least a few of said carriers (1) support pusher shoes (3), which are movable along the carriers (1) in question at desired locations by guide means provided on the frame and wherein seen in the direction of movement of the transport means, a pusher shoe has a front surface which slopes upward to the rear and the sides of the rear part of a pusher shoe are bounded by pushing surfaces (30) including an angle with each other, whose extensions intersect at a point located behind the pusher shoe in question during operation, seen in the intended direction of movement of the pusher shoe, and wherein a lateral boundary surface (31) of the pusher shoe (3), which joins a front end of a pushing surface (30), extends substantially vertically from the bottom edge of the boundary surface (31) in question, and substantially parallel to the direction of movement (A) of the transport means whilst the height of said substantially vertically extending and boundary surface (31) gradually decreases in the direction of the front end of the pusher shoe (3) over at least part of its length and a further boundary surface (32) of the pusher shoe (3) joining the upper edge of said at least substantially vertically extending boundary surface (31) and the front end of the pushing surface (30) slopes upward in the direction of the longitudinal axis of the upper surface (29) of the pusher shoe, wherein the inclined front surface of the pusher shoe overhanging in a downward direction the upper surface (5) of the carrier (1) joins the further upwardly sloping boundary surface (32) along a line sloping upwards from its bottom edge situated at the level of and during operation sliding along the upper surface (5) of the carrier (1) in the direction of the longitudinal axis of the upper surface (29) of the pusher shoe.

## Patentansprüche

1. Ein einen Rahmen und ein antreibbares endloses Transportmittel umfassender Förderer, der mit Trägern (1) versehen ist, die sich quer zur Bewegungsrichtung (A) des Transportmittels parallel zueinander erstrecken und an mindestens einem endlosen flexiblen Kupplungsmittel schwenkbar angekoppelt sind und Flächen zum Abstützen von Gegenständen aufweisen, wobei zumindest einige der Träger (1) Mitnehmer-Gleitstücke (3) tragen, die entlang der betreffenden Träger (1) an gewünschten Stellen durch an dem Rahmen vorgesehene Führungsmittel bewegbar sind, wobei, in Bewegungsrichtung des Transportmittels gesehen, ein Mitnehmer-Gleitstück eine Vorderfläche aufweist, die schräg zum hinteren Teil steht und die Seiten des hinteren Teils eines Mitnehmer-Gleitstücks durch Mitnehmerflächen (30) begrenzt sind, die miteinander einen Winkel einschließen und deren Verlängerungen sich, in der beabsichtigten Bewegungsrichtung der Mitnehmer-Gleitstücke gesehen, in einem hinter dem betreffenden Mitnehmer-Gleitstück gelegenen Punkt während des Betriebs schneiden, und wobei eine sich an ein Vorderende einer Mitnehmerfläche (30) anschließende seitliche Grenzfläche (31) des Mitnehmer-Gleitstücks (3) sich im wesentlichen vertikal von der Unterkante der betreffenden Grenzfläche (31) und im wesentlichen parallel zu der Bewegungsrichtung (A) des Transportmittels erstreckt, wobei die Höhe der sich im wesentlichen vertikal erstreckenden Grenzfläche (31) allmählich in Richtung des Vorderendes des Mitnehmer-Gleitstücks (3) über wenigstens einen Teil seiner Länge abnimmt, und eine weitere Grenzfläche (32) des Mitnehmer-Gleitstücks (3) sich an die Oberkante der sich im wesentlichen vertikal erstreckenden Grenzfläche (31) anschließt und das Vorderende der Mitnehmerfläche (30) schräg nach oben steht in Richtung der Längsachse der Oberseite (29) des Mitnehmer-Gleitstücks, wobei die schräge Vorderfläche des Mitnehmer-Gleitstücks, die abwärtsgerichtet über die Oberseite (5) des Förderers (1) hervorsteht, sich an die weiter schräg nach unten stehende Oberseite (32) anschließt von der Unterkante entlang einer schräg nach oben stehenden Linie angebracht auf der Höhe und während des Betriebs gleitend entlang der Oberseite (5) des Förderers (1) in Richtung der Längsachse der Oberseite (29) des Mitnehmer-Gleitstücks.

## Revendications

1. Transporteur comprenant un châssis et des moyens d'acheminement propres à être entraînés sans fin, comportant des supports (1), qui s'étendent transversalement à la direction de déplacement (A) des moyens d'acheminement, parallèles entre eux, lesquels supports (1) sont reliés de façon pivotante à au moins un moyen d'accouplement, souple et sans fin, et présentent des surfaces supérieures (5) destinées à soutenir des objets, tandis qu'au moins un petit nombre desdits supports (1) portent des sabots pousseurs (3), qui sont mobiles le long des supports (1) en question, en des emplacements souhaités et à l'aide de moyens de guidage, prévus sur le châssis et dans lequel un sabot pousseur, vu dans la direction de déplacement des moyens d'acheminement, présente une surface frontale qui s'étend en pente ascendante vers l'arrière tandis que les côtés de la partie arrière d'un sabot pousseur sont délimités par des surfaces de poussée (30), qui forment un angle entre elles et dont les prolongements se coupent en un point situé derrière le sabot pousseur concerné, pendant le fonctionnement, selon une vue dans la direction prévue pour le déplacement du sabot pousseur, et dans lequel une surface formant limite latérale (31) du sabot pousseur (3), rejoignant une extrémité frontale d'une surface de poussée (30), s'étend sensiblement verticalement à partir du bord inférieur de la surface formant limite (31) en question, et sensiblement parallèlement à la direction de déplacement (A) des moyens d'acheminement, tandis que la hauteur de ladite surface formant limite (31), s'étendant sensiblement verticalement, décroît graduellement en direction de l'extrémité frontale du sabot pousseur (3), sur au moins une partie de sa longueur, une autre surface formant limite (32) du sabot pousseur (3) étant prévue pour joindre le bord supérieur de ladite au moins une surface formant limite (31), s'étendant sensiblement verticalement, et l'extrémité frontale de la surface de poussée (30), laquelle autre surface s'étend en pente ascendante dans la direction de l'axe longitudinal de la surface supérieure (29) du sabot pousseur, dans lequel la surface frontale inclinée du sabot pousseur, en surplomb dans le sens descendant par rapport à la surface supérieure (5) du support (1) rejoint ladite autre surface formant limite (32), s'étendant en pente ascendante et ce, suivant une ligne qui est en pente ascendante depuis le bord inférieur, situé au niveau de la surface supérieure (5) du support (1) en question, et glissant le long de celle-ci pendant le fonctionnement, laquelle pente s'étend dans la direction de l'axe longitudinal de la surface supérieure (29) du sabot pousseur.
